# EUROPEAN PATENT APPLICATION

(11) **EP 2 196 249 A1**
(43) Date of publication of application: **16.06.2010**
(21) Application number: 09177443.0
(22) Date of filing: 30.11.2009
(51) Int. Cl.: B01D 19/00

(54) **Method and system for centrifugal resin degassing**

(30) Priority: 08.12.2008 US 330083
(71) Applicant: General Electric Company, Schenectady, NY 12345 (US)
(72) Inventor: Hefner, Rebecca E., Greenville, SC 29607 (US); Cairo, Ronald R., Greer, SC 29650 (US)
(74) Representative: Gray, Thomas

(57) **Abstract**

A method and system for degassing a resin containing trapped gas bubbles is provided. A centrifugal chamber (200) that is capable of being rotated retains the resin, and the rotation of the centrifugal chamber reduces the amount of trapped gas bubbles contained within the resin.

## Description

### BACKGROUND OF THE INVENTION

The present invention relates to a resin degassing and, in particular, to a method and system for using centrifugal energy to degas resins.

Gas and air bubbles can become trapped in a multi-part resin system as a result of typical mixing processes. The air bubbles are formed from the mixing or "folding" operation required to evenly disperse the multiple parts of the resin system. Use of a resin with entrapped air or gas bubbles in a composite laminate creates a source of defects that can link-up or grow to create local and ultimately global disbonding or delaminating.

Large-scale, continuous fiber reinforced composite components, such as wind turbine blades, or other large composite structures, are typically fabricated by a hand lay-up method. The hand lay-up method typically includes positioning a continuous fiber tape or fabric into a mold and pouring a liquid resin onto the fiber tape or fabric. The blend is rolled to work out any air bubbles and to fully distribute the resin followed by curing typically at room temperature.. The manipulation of the resin to remove air bubbles and to distribute the resin may result in damage to the fibers making up the composite with the consequence being a reduction in strength and stiffness of the component. This method suffers from the drawback that the processing method is labor intensive and suffers from high costs and less than optimal processing conditions for long-term durability. Alternative methods, such as resin film infusion (RFI), are desirable techniques due to the decreased labor costs related to performing RFI and the reproducible parts that may be achieved. The curing typically takes place at elevated temperatures in an autoclave and the cure is done in a vacuum bag under high pressure (typically 100-200 psi) in order to make the resin flow and remove entrapped air and condensable gases. However, large scale components such as wind turbine blades make autoclave curing cost prohibitive due to the size of autoclave required

### BRIEF SUMMARY OF THE INVENTION

According to one aspect of the present invention, a system for degassing a resin containing trapped gas bubbles is provided. A centrifugal chamber that is capable of being rotated retains the resin, and the rotation of the centrifugal chamber reduces the amount of trapped gas bubbles contained within the resin.

According to another aspect of the present invention, a method for degassing a resin is provided. A first step includes providing a mixing chamber for mixing the resin. Another step includes providing a centrifugal chamber for applying centrifugal force to the resin. A subsequent step applies centrifugal force to the resin. The application of centrifugal force to the resin reduces the amount of trapped gas bubbles contained within the resin.

### BRIEF DESCRIPTION OF THE DRAWINGS

There follows a detailed description of embodiments of the invention by way of example only with reference to the accompanying drawings, in which:
Fig. 1 is a perspective illustration of a degassing system according to one embodiment of the present invention; and
FIG. 2 is a perspective illustration of a degassing system according to another embodiment of the present invention.

### DETAILED DESCRIPTION OF THE INVENTION

The present invention provides a method and system for utilizing centrifugal force to reduce or eliminate gas and air bubbles trapped in a multi-part resin system as a result of some known mixing processes. The term "resin" can also include a powder, multiple powders or powdered mixtures in addition to resin. Using a resin with entrapped air or gas bubbles in a composite laminate creates a source of defects that can link-up or grow to create local and ultimately global disbonding or delaminating. According to aspects of the present invention, centrifugal force can be used to coalesce distributed bubbles into larger bubbles, which are then easier to evacuate.

One of the problems solved, by aspects of the present invention, is to reduce, mitigate or eliminate the gas and air bubbles trapped in a multi-part resin system as a result of some known mixing processes. This can be accomplished by applying centrifugal force to the resin after mixing, or at staged intervals during mixing, such that smaller gas bubbles are caused to migrate and touch each other to coalesce and become larger bubbles, which then migrate more easily to the center of the rotating chamber. Degassing progress could be monitored by ultrasound instrumentation, which is calibrated against theoretical fluid density with few or no bubbles entrapped. Degassing operations could be ended when sufficient bubbles were evacuated. Drawing a vacuum at the center of the rotating chamber speeds movement of bubbles through the resin and facilitates this process.

The remaining resin can be ported to a delivery pipe for application to the composite laminate via any of the traditional methods such as resin transfer molding, vacuum assisted resin transfer molding, wet-bath filament or tow winding, etc.

The method and system of the present invention may be applied in either a batch or continuous process. In all cases, the following factors are optimized for gas bubble formation and migration time to the center of rotation within allotted processing times: centrifugal force level, liquid viscosity (as moderated by temperature and liquid properties), residence time of resin in the centrifugal chamber, distance bubbles must travel to reach the center of rotation and burst, pressure above resin surface, and staging interval energy level and frequency.

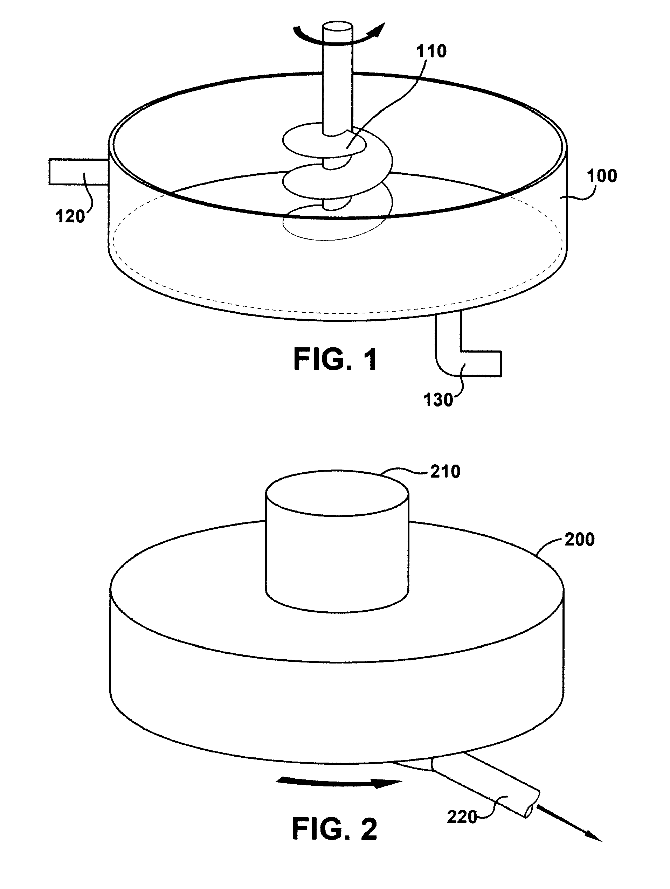

Fig. 1 illustrates a perspective view of one embodiment of the present invention. A mixing chamber 100 can comprise an inline mixer to mix the components (typically two or more) of the resin system. The mixer 110 may be either a single or dual blade paddle or a screw/auger, or any other suitable mixing device. The resin components can be introduced into the mixing chamber 100 via inlet pipe 120. After mixing for the desired time, the mixed components can be removed from mixing chamber 100 via output pipe 130, and may be delivered to a centrifugal chamber (shown in Fig. 2).

Fig. 2 illustrates a perspective view of a centrifugal chamber that can be used with one embodiment of the system and method of the present invention. The centrifugal chamber 200 can be a toroidal-shaped, covered, trough or any other suitable container having centrifugal force application capability. The mixed resin can be transferred to the centrifugal chamber 200 either by a connected delivery pipe (e.g., pipe 130), by hand transport or by any other suitable delivery means.

The centrifugal chamber 200 may include an integral vacuum pump 210 in the center that draws the migrated air or gas bubbles from the resin. The centrifugal chamber 200 can spin the resin at sufficient rotational speeds to force the denser resin to outer radial positions, while the trapped air or gas bubble (which are less dense) migrate towards inner radial positions. In other words, the lighter gas or air bubbles are displaced by the denser resin and migrate radially inward. The migration can be augmented by a vacuum generated by a vacuum pump 210, which may be located near the center of the centrifugal chamber 200. In addition to encouraging inward migration, the vacuum facilitates collapse of the bubbles. When sufficient removal has been attained, the centrifugal chamber 200 can be stopped and the resin drawn off or delivered via output pipe 220 for immediate use.

Ultrasound or other acoustic emission monitoring instrumentation (not shown) that determines the level of remaining bubbles by comparing to fluid density at a desired bubble state can be employed to determine when sufficient ultrasonic energy has been applied.

The method for a batch process, according to one aspect of the present invention, can include the steps herein described. The desired resin components can be premixed in mixing chamber 100. The mixed resin components can be pumped into the centrifugal chamber 200 via pipe 130.

Centrifugal force is applied to the resin by centrifugal chamber 200 for a period sufficient to out-gas the desired amount of gas bubbles. Concurrently with the centrifugal force application, a vacuum may be drawn off the top of the chamber by vacuum device 210 to encourage bubble migration to the center of rotation of the resin. When a monitoring system (not shown) indicates that sufficient degassing has been accomplished, the process can be stopped and resin may be drawn from the chamber 200 for use via output port 220.

In another embodiment of the present invention, the mixing chamber 100 and the centrifugal chamber 200 may be combined. In this embodiment, the mixing of the resin and the centrifugal force application is applied within the same chamber.

While the invention has been described in connection with what is presently considered to be one of the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A system for degassing a resin containing trapped gas bubbles, said system comprising:
a centrifugal chamber (200) for retaining said resin, the centrifugal chamber (200) capable of being rotated;
wherein, rotation of said centrifugal chamber (200) reduces the amount of trapped gas bubbles contained within said resin.

2. The system according to claim 1, further comprising:
a vacuum source (210) connected to said centrifugal chamber (200);
wherein said vacuum source (210) applies a vacuum to said centrifugal chamber (200) to assist in the reduction of said trapped gas bubbles.

3. The system according to claim 1 to 2, further comprising a mixing chamber (100) for mixing said resin.

4. The system according to claim 3, wherein said mixing chamber (100) comprises an auger-type mixing device (110).

5. The system according to claim 3, wherein said mixing chamber (100) comprises a paddle-type mixing device.

6. The system according to any of the preceding claims, further comprising:
a thermal application device in thermal communication with said centrifugal chamber (200);
wherein said thermal application device can heat or cool said resin.

7. The system according to claim 6, further comprising:
at least one monitoring device for monitoring the progress of a degassing operation.

8. The system according to claim 7, wherein said at least one monitoring device monitors at least one of the following parameters:
temperature, pressure, resin density, and resin viscosity.

9. A method for degassing a resin comprising:
providing a mixing chamber (100) for mixing said resin;
providing a centrifugal chamber (200) for applying centrifugal force to said resin;
applying centrifugal force to said resin;
wherein, the centrifugal force applied to said resin reduces the amount of trapped gas bubbles contained within said resin.

10. The method according to claim 9, further comprising:
applying a vacuum to said centrifugal chamber;
wherein, said vacuum assists in the reduction of said trapped gas bubbles in said resin.

11. The method according to claim 9 or 10, further comprising:
transferring said resin from said mixing chamber (100) to said centrifugal chamber (200).

12. The method according to any of claims 9 to 11, wherein said mixing chamber comprises an auger-type mixing device.

13. The method according to any of claims 9 to 11, wherein said mixing chamber comprises a paddle-type mixing device.

14. The method according to any of claims 9 to 13, further comprising:
providing a thermal application device in thermal communication with said centrifugal chamber (200);
wherein said thermal application device is used to heat or cool said resin.

15. The method according to any of claims 9 to 14, further comprising:
providing at least one monitoring device for monitoring the process of a degassing operation.
